# EUROPEAN PATENT SPECIFICATION

(11) **EP 2 419 253 B1**
(45) Date of publication and mention of the grant of the patent: **11.09.2013**
(21) Application number: 10763999.9
(22) Date of filing: 03.03.2010
(51) Int. Cl.: B29C 45/52

(54) **AN IMPROVED CHECK VALVE FOR A RESIN PLASTICIZING SCREW**
VERBESSERTES RÜCKSCHLAGVENTIL FÜR EINE PLASTIFIZIERSCHNECKE
CLAPET ANTI-RETOUR AMELIORE POUR UNE VIS DE PLASTIFICATION

(30) Priority: 13.04.2009 US 168647 P
(43) Date of publication of application: 22.02.2012
(60) Divisional application: 13162461.1
(73) Proprietor: Husky Injection Molding Systems Ltd., Bolton, ON L7E 5S5 (CA)
(72) Inventor: HALTER , Christophe, 6781 Selange (BE); LOOIJE , Peter Adrian, Newmarket, Ontario L3Y 7N5 (CA); GLAESENER , Pierre, L-7780 Bissen (LU)
(74) Representative: Vossius, Corinna
(86) International application number: PCT/CA2010/000255
(87) International publication number: WO 2010/118501

(56) References cited:
- CA-A1- 2 061 205
- CA-A1- 2 061 205
- DE-U1- 20 116 889
- US-A- 4 349 044
- US-A- 4 349 044
- US-A- 4 643 665
- US-A- 4 988 281
- US-A- 4 988 281
- US-A1- 2005 233 020
- US-A1- 2005 233 020
- US-B2- 6 585 001
- US-B2- 6 585 001

## Description

### FIELD OF THE INVENTION

The present invention relates to injection molding machinery. More specifically, the present invention relates to check valves used in the barrels of an injection unit.

### BACKGROUND OF THE INVENTION

Some examples of known molding systems are: (i) the HyPET ™ Molding System, (ii) the Quadloc ™ Molding System, (iii) the Hylectric ™ Molding System, and (iv) the HyMet ™ Molding System, all manufactured by Husky Injection Molding Systems, Ltd..

The injection molding process typically comprises preparing a polymeric (or sometimes metal) material in an injection unit of an injection unit for melting, injecting the now-melted material under pressure into a closed and clamped mold, solidifying the material in its molded shape, opening the mold and ejecting the part before beginning the next cycle. The molding material typically is supplied to the injection unit from a hopper in the form of pellets or powder. The injection unit transforms the solid material into a molten material (sometimes called a "melt"), typically using a feed screw, which is then injected into a hot runner or other molding system under pressure from the feed screw or a plunger unit. A shut off valve assembly is often provided to stop and start the flow of molten material from the barrel to the molding system.

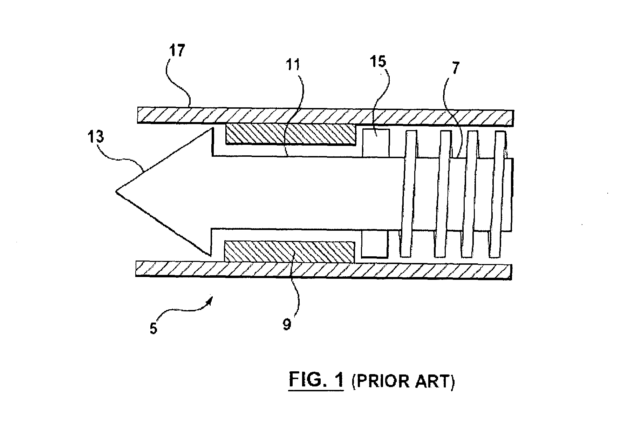

Many screws mount ring check valves at their distal end to prevent melt from flowing back during injection. A typical prior-art ring check valve is shown in Fig. 1 at 5. Ring check valve 5 is mounted at the distal end of a screw 7, and has a ring 9 floatably mounted around a shaft 1 between a tip retainer 13 and a rear seat 15. Ring 9 abuts against the interior surface of an injection barrel 17. During the recovery phase, melt pressure forces the screw 7 rearward, allowing the melt to flow under the ring 9 towards the open end of the barrel 17. During the injection phase, the screw 7 moves forward, bringing the rear seat 15 into contact with the ring 9, and thereby closing off the melt path throughout the remainder of the injection stroke.

As is known to those of skill in the art, ring check valves have simple flow paths (in comparison to other types of check valves), resulting in lower shear rates and fewer hang-up spots for the melt. However, wear of the tip retainer and the ring is a common problem in prior art ring check valves. During recovery, the tip retainer rotates with the screw and the ring freely floats in the barrel. Relative movement of the contact surfaces of both the tip retainer and the ring, loaded with recovery pressure and viscous drag forces, causes the wear failure of these components. The problem is especially severe for high performance machines, which recover using high screw RPMs.

Some prior art ring check valves have used carbide inserts on the tip retainer to increase service life of the wearing components. Unfortunately, because of the small bearing area between wear surfaces, the problem has not been eliminated and failures of this design due to wear still occur.

Document DE 201 16 889 Ul discloses a non-return valve for the injection unit of an injection molding machine. The valve is arranged at the end of an injection screw adjacent the nozzle. A moveable locking sleeve is provided for opening and closing discharge openings for the flow of the melt.

### SUMMARY OF THE INVENTION

According to the invention, there is provided a ring-check valve for an injection screw, comprising:
a retainer tip being operable to be attached to a distal end of the injection screw;
a ring assembly being coaxially mounted around the retainer tip,
the ring assembly and the retainer tip operable to cooperatively move between (i) an open position which permits melt to flow through the ring-check valve, and (ii) a closed position which prevents backflow of the melt, and the retainer tip being rotatable and translatable, the retainer tip including:
   a shaft;
   a tip portion at a forward end of shaft; and
   a rear seat extending outwards from the shaft, the rear seat including a seating portion; and
   the ring assembly including:
a ring being sized as to abut against an inside of an extrusion barrel, the seating portion for seating the ring when the ring-check valve is in the closed position;
an inner ring being concentrically located around the shaft of the retainer tip;
a plurality of inward-facing flutes maintaining a spacing between the ring and the inner ring, the spacing between the ring and the inner ring providing a throughput region, and
the tip portion being sized as to minimally occlude the throughput region by not extending past the inner ring.

According to an aspect of the invention, there is provided a check valve for a screw. The check valve has a retainer tip that is operable to be attached to a distal end of a screw shaft, the retainer tip operable to retain a ring assembly. The ring assembly is coaxially mounted around the retainer tip, the ring assembly and the retainer tip operable to cooperatively move between an open position which permits melt to flow through the check valve and a closed position which prevents backflow of the melt. Contact surfaces between the ring assembly and the retainer tip while the ring assembly is in the open position are located proximate to the longitudinal axis of the screw.

According to another aspect of the invention, there is provided a check valve for a screw. The check valve has a retainer tip that is operable to be attached to a distal end of a screw shaft, the retainer tip operable to retain a ring assembly. The ring assembly is coaxially mounted around the retainer tip, the ring assembly and the retainer tip operable to cooperatively move between an open position which permits melt to flow through the check valve and a closed position which prevents backflow of the melt. The ring assembly includes inward-facing flutes that extend towards the retainer tip.

### DETAILED DESCRIPTION OF THE DRAWINGS

The invention and its embodiments will be more fully appreciated by reference to the following detailed description of illustrative (non-limiting) embodiments in accordance with the present invention when taken in conjunction with the accompanying drawings, in which:
Fig. 1 is a side cross-sectional view of a prior-art ring check valve;
Fig. 2 is a side cross-sectional view of an injection molding machine according to a first embodiment of the invention;
Fig. 3 is a perspective view of a check valve for the injection molding machine shown in Fig. 2;
Fig. 4 is a frontal plan view of a check valve for the injection molding machine shown in Fig. 2;
Fig. 5 is a side cross-sectional view of a check valve for the injection molding machine shown in Fig. 2;
Fig. 6 is a perspective view of channels for the check valve shown in Figs. 2-5;
Fig. 7 is a perspective view of a ring assembly for a check valve for an injection molding machine according to another embodiment which is not part of the invention;
Fig. 8 is a perspective view of a ring assembly for a check valve for an injection molding machine according to another embodiment which is not part of the invention;
Fig. 9 is a side cross-sectional view of a check valve according to another embodiment of the invention;
Fig. 10 is a side cross-sectional view of a check valve according to another embodiment of the invention;
Fig. 11 is a perspective view of a ring assembly for a check valve for an injection molding machine according to another embodiment which is not part of the invention;
Fig. 13 is a perspective cross-sectional view of a ring assembly for a check valve for an injection molding machine according to another embodiment of the invention;

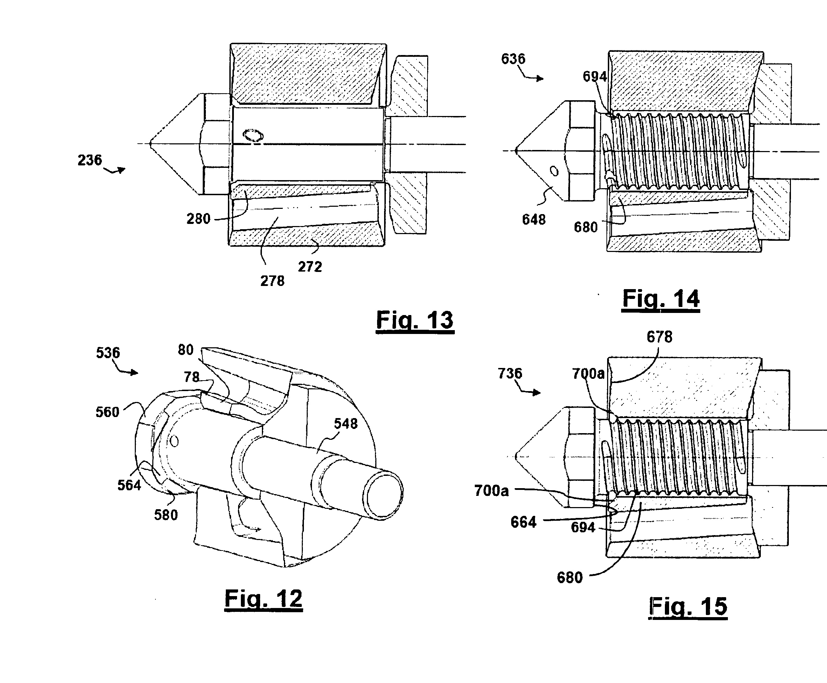

Fig. 13 is a cross-sectional view of a ring assembly for a check valve for an injection molding machine according to another embodiment of the invention;
Fig. 14 is a cross-sectional view of a ring assembly for a check valve for an injection molding machine according to another embodiment of the invention; and
Fig. 15 is a cross-sectional view of a ring assembly for a check valve for an injection molding machine according to another embodiment of the invention.

### DETAILED DESCRIPTION OF THE NON-LIMITING EMBODIMENTS

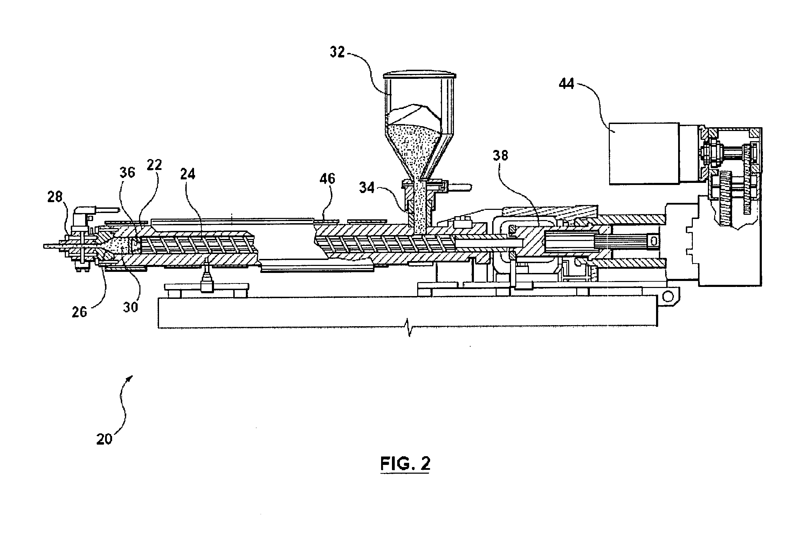

Referring now to Fig. 2, an injection unit for a molding system in accordance with a first non-limiting embodiment is shown generally at 20. The injection unit 20 includes an extrusion barrel 22 adapted to receive an injection screw 24 (hereafter referred to as the "screw 24"). Extrusion barrel 22 may include an optional protective liner (not shown). A cylinder head 26 closes off the end of extrusion barrel 22, and mounts a nozzle 28, coaxially aligned therewith. A melt channel 30 is defined between them, extending through extrusion barrel 22, cylinder head 26 and nozzle 28.

Resin material (typically thermoset or thermoplastic pellets) is fed from a hopper 32. through a feed throat 34 into melt channel 30. The rotational movement of screw 24 plasticizes the material prior to it exiting through nozzle 28. In some embodiments, screw 24 may include a plurality of specialized zones (not shown). For example, a first zone might include screw flights adapted for conveying solid material from the hopper 32, a latter zone for shearing and plasticizing the material, and a final zone for mixing the now-molten material prior to exiting through nozzle 28. Screw 24 may also include weirs or channels to separate out unmelted material from the melted material for further processing. Other adaptations will occur to those of skill in the art.

In addition to rotating, screw 24 is, in some embodiments, operable to reciprocate back and forth to express the melted material out through nozzle 28 and pack the material within a mold (not shown). A ring-check valve 36 is provided near the tip of screw 24 to prevent the reentry of the melted material during the forward motion of the screw 24 during its injection phase. The rotational movements of screw 24 is provided by a motor 44, which may be an electric motor, a hydraulic motor, or a combination thereof (the embodiment depicted in Fig. 2 shows an electric version of motor 44). The rotational movement of screw 24 helps to melt and mix the melted material. Screw 24 is also translatable within extrusion barrel 22 via piston 38, in order to apply injection and hold pressure during the molding process.

Heater bands 46 are provided along a portion of the length of extrusion barrel 22 (though away from the feed throat 34) to assist in the melting of the material (in addition to the heat generated by the shearing action of screw 24) and then maintain the temperature of the molten material as it approaches the nozzle 28. In some embodiments, heater bands 46 are covered with an insulating barrel cover to minimize heat loss). Thermocouples are provided along the extrusion barrel 22 to provide an indication of the melted material's temperature.

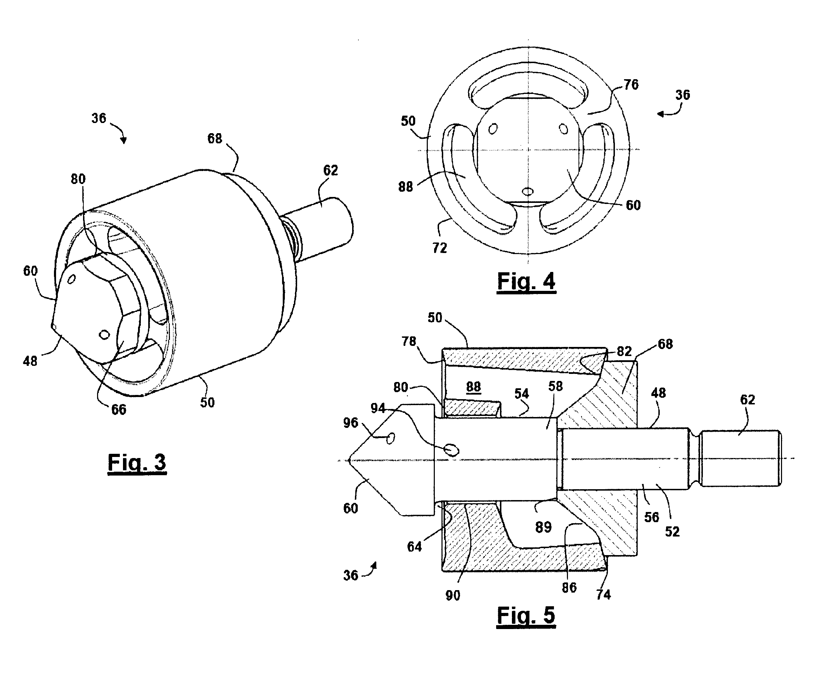

Referring now to Figs. 3-5, ring-check valve 36 is described in greater detail. Figs. 3-5 show the ring-check valve 36 in the closed position. Ring-check valve 36 includes a retainer tip 48 and a ring assembly 50.

Retainer tip 48 includes a shaft 52 and a tip portion 60 at a distal or forward end of shaft 52. In the presently-illustrated embodiment, shaft 52 has a wider portion 54 and a thinner portion 56, with a step 58 between wider portion 54 and thinner portion 56. However, a shaft having either a constant diameter or other variations in diameter could also be used. In some embodiments, the opposing end of shaft 52 defines an interface 62 adapted to be removably mated with a complementary-interface on the end of screw 24 (Fig. 2). Once mounted, retainer tip 48 is kinematically coupled with screw 24 and thus rotates and translates in tandem with the screw. Optionally, a spacer (not shown) can be attached to an end of shaft 52 by a fastener (not shown) to prevent the retainer tip 48 from bottoming out in the screw 24.

Tip portion 60 is generally conically shaped, and has a greater diameter than shaft 52 so that it provides a ledge extending beyond the wider portion 54 of shaft 52 that defines a front seat 64 for preventing removal of ring assembly 50 in a forward direction. Tip portion 60 is smaller in diameter than ring assembly 50, and is also smaller than typical prior art retainer tips (such as the one shown in Fig. 1). As the tip portion 60 has a narrower diameter, it can also have a shorter length while maintaining the same slope of the conical portion, thereby reducing the length of retainer tip 48. Optionally, the tip portion 60 provides a plurality of longitudinally-aligned cut-outs 66. The plurality of longitudinally-aligned cut-outs 66 provide gripping surfaces when the retainer tip 48 is mounted or dismounted from the screw 24. In the presently-illustrated embodiment, the plurality of longitudinally-aligned cut-outs 66 are comparatively broad and shallow compared to prior art retainer tip flutes.

Retainer tip 48 further includes a rear seat 68 extending outwards from shaft 52 and located between tip portion 60 and interface 62. Rear seat 68 is sized as to provide a smaller diameter than extrusion barrel 22 so that it provides a clear flow path for melt travelling through extrusion barrel 22 when ring-check valve 36 is in the open position. In the presently-illustrated embodiment, rear seat 68 includes a seating portion 82 for seating the ring assembly 50 and a sloped portion 86 that extends within the ring assembly 50 and helps smooth the melt flow. Rear seat 68 can also include a forward wall 89 that abuts against step 58 on shaft 52 to help prevent fonvard travel of the rear seat 68.

Ring assembly 50 is floatably and concentrically mounted around shaft 52 between front seat 64 and rear seat 68. Ring assembly 50 includes a ring 72 that is sized as to abut against the inside of extrusion barrel 22 (Fig. 2). In the currently-illustrated embodiment, the thickness of ring 72 diminishes on its inward side as it moves from its rearward edge 74 towards its forward edge 78. Ring assembly 50 further includes an inner ring 80 that is also concentrically located around shaft 52. In some embodiments, the thickness of inner ring 80 increases as it moves from its rearward edge to its forward edge so that the distance between the facing surfaces of ring 72 and inner ring 80 remains substantially constant. In some embodiments, the thickness of inner ring 80 at its forward edge should be the same as the height of the front seat 64. In the presently-illustrated embodiment, the length of inner ring 80 is less than that of ring 72. A plurality of inward-facing flutes 76 maintain spacing between ring 72 and inner ring 80. In the presently-illustrated embodiment, the plurality of inward-facing flutes 76 are tapered as to narrow as they approach the inner ring 80.

The space between ring 72 and the inner ring 80 provides a throughput region 88. As the plurality of inward-facing flutes 76 generally do not see excessive wearing, they can be comparatively thin relative to prior art flutes which are located on the screw, helping to increase the cross-sectional area of throughput region 88. Tip portion 60 is sized as to minimally occlude the throughput region 88 by not extending past inner ring 80.

Operation of ring-check valve 36 is similar to that of prior-art designs. During the recovery phase, melt pressure forces the screw 24 (including the attached retainer tip 48 and ring assembly 50) in a rearward direction, moving the ring-check valve 36 into its open position, allowing the melt to flow under the ring 72 (which remains substantially in place against the interior surface of extrusion barrel 22), and through throughput region 88 towards the end of the extrusion barrel 22. During the recovery phase, the front surface of inner ring 80 provides a contact surface which abuts against an opposing contact surface on the tip portion 60, namely front seat 64. Relative (i.e., rotational) movement between contact surfaces on the retainer tip 48 and ring assembly 50 occurs proximate to the axis of screw 24, which is closer to the axis of screw 24 than in prior-art check valves, and at a lower speed, thereby reducing wear damage to ring-check valve 36. In addition, inner ring 80 provides a comparatively large contact surface for front seat 64, further reducing wear. During the injection phase, the screw 24 moves forward, bringing the seating portion 82 of rear seat 68 into contact with the rearward edge 74 of ring 72, and thereby sealing off the melt path for the remainder of the injection stroke.

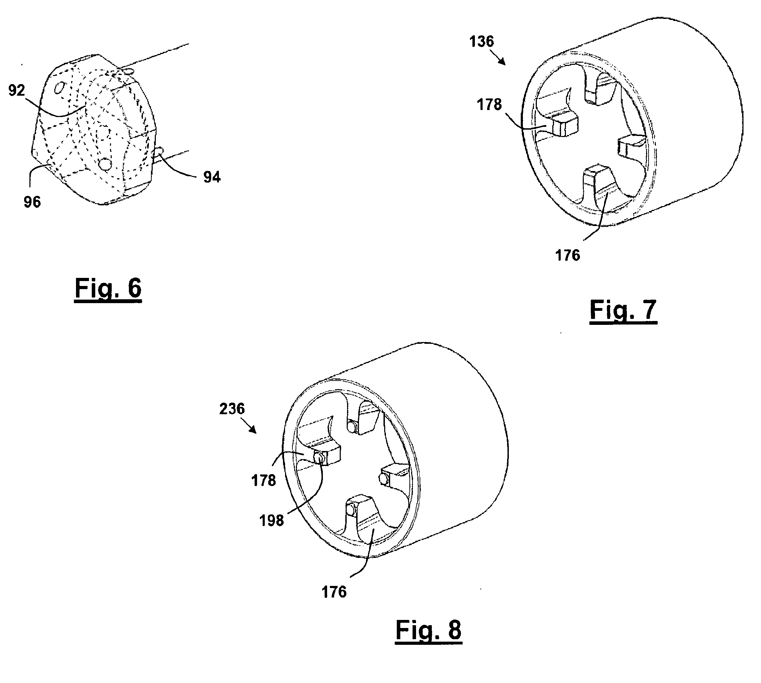

To reduce the amount of melt that is trapped between opposing surfaces of retainer tip 48 and inner surface 90 on inner ring 80, at least one channel 92, and optionally, a multiple of channel 92 (Fig. 6) may be added to provide an additional exit path for expression of the melt. An inlet 94 for each channel 92 is located on the shaft 52 near the tip portion 60, and an outlet 96 for each channel 92 is located on the conical end of each tip portion 60. The channels 92 are typically drilled through retainer tip 48. Optionally, each channel 92 (relative to the longitudinal axis of retainer tip 48) is oriented and/or sized to facilitate a pumping effect on the melt (generated by rotation of the retainer tip 48).

Referring now to Fig. 7, an additional embodiment which is not part of the claimed subject matter is shown. In this embodiment, a ring check valve 136 is provided that omits an inner ring. Instead, the plurality of inward-facing flutes 176 provide a forward edge 178 to provide a contact surface with forward seat. While this configuration reduces the contact surface of the forward seat, it also reduces the area where melt can be trapped and subject to degradation.

Referring now to Fig. 8, an additional embodiment which is not part of the claimed subject matter is shown. In this embodiment, a ring check valve 236 is provided that also omits an inner ring. At least one insert 198, and, optionally, a plurality of inserts 198 can be provided on the forward edge 178 of the plurality of inward-facing flutes 176 to provide additional wear life. Inserts 198 are typically disks or filaments made of carbide that have been brazed or welded to the forward edge 178 of the plurality of inward-facing flutes 176. The inserts 198 are not particularly limited by shape and may contain hydrodynamic features. Alternatively, in embodiments of the invention having an inner ring, the inserts 198 can be mounted to the forward edge of the inner ring (not shown).

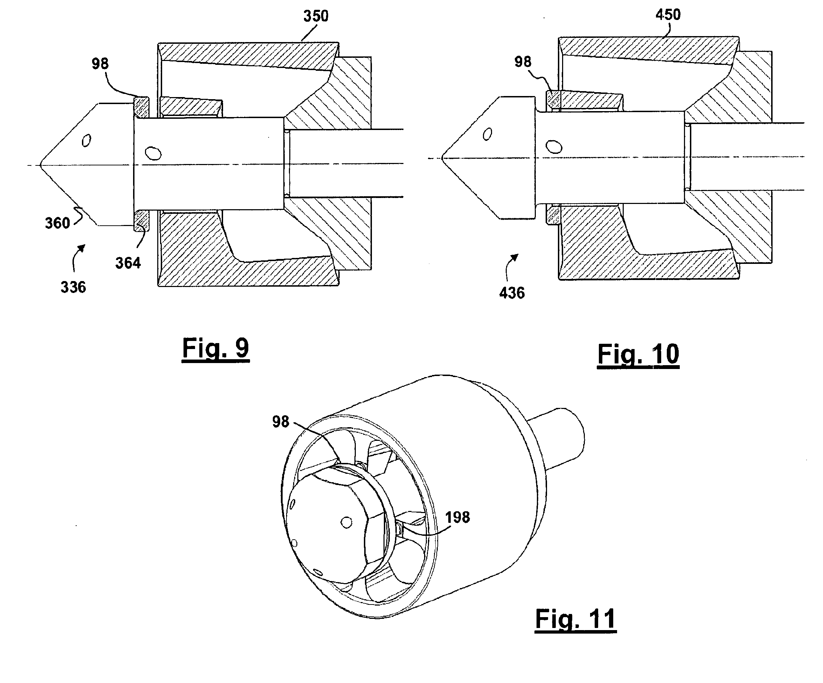

Referring now to Figs. 9 and 10, two additional embodiments of the invention are shown. In these embodiments, a ring check valve 336 and 436 respectively is presented, having a wear ring 98 located between the front seat of the retainer tip and the ring assembly. In Fig. 9, the wear ring 98 is fixed on the front seat 364 of tip portion 360. In Fig. 10, the wear ring 98 is fixed on the ring assembly 450. Alternatively, the wear ring 98 could float freely between the retainer tip and the ring assembly (not shown). The wear ring 98 is a replaceable part, and typically is manufactured from a ceramic material such as zirconium oxide. For greater resiliency, the use of a wear ring 98 could be combined with the use of inserts 198, as is shown in Fig. 11.

Referring now to Fig. 12, an additional embodiment is shown. A ring check valve 536 is provided having additional lubrication functionality. Located on a front seat 564 of tip portion 560 is a cutaway portion 580, which provides a small gap between front seat 564 and the forward edge 78 of the inner ring 80. During recovery, melt pressure forces a small amount of the melt out through cutaway portion 580. Rotation of retainer tip 548 causes the leaked melt to be spread across the interface between front seat 564 and forward edge 78, creating hydrodynamic lubrication and reduced wear of the ring check valve 536.

Referring now to Fig. 13, an additional embodiment of the invention is shown. A ring check valve 236 is provided where inner ring 280 has a length substantially equivalent to ring 272. Flutes 278 also extend substantially fully along the length of ring 272.

Referring now to Fig. 14, an additional embodiment is shown. A ring check valve 636 is provided having additional lubrication functionality. Threads 694 are provided on retainer tip 648 on an opposing surface underneath the inner ring 680, which act as a screw pump to move melt located there between. Alternatively, threads could be provided on a surface of the inner ring opposing the retainer tip (not shown).

Referring now to Fig. 15, an additional embodiment is shown. A ring check valve 736 is provided having additional lubrication functionality. Like the embodiment shown in Fig. 14, threads 694 are provided to act as a screw pump to move melt. An undercut 700a (i.e., having a chamfer) is located on the forward edge 678 of the inner ring 680 to help the melt exit from underneath the inner ring. In addition, the exiting melt works to force the inner ring 680 away from front seat 664, thereby reducing wear.

## Claims

1. A ring-check valve (36, 236, 336, 436, 536, 636, 736) for an injection screw (24), comprising:
a retainer tip (48, 548, 648) being operable to be attached to a distal end of the injection screw (24);
a ring assembly (50, 450) being coaxially mounted around the retainer tip, the ring assembly and the retainer tip operable to cooperatively move between (i) an open position which permits melt to flow through the ring-check valve, and (ii) a closed position which prevents backflow of the melt, and the retainer tip (48, 548, 648) being rotatable and translatable, the retainer tip including:
a shaft (52);
a tip portion (60, 360, 560) at a forward end of shaft; and
a rear seat (68) extending outwards from the shaft, the rear seat including a seating portion (82); and
the ring assembly (50, 450) including:
a ring (72, 272) being sized as to abut against an inside of an extrusion barrel (22), the seating portion for seating the ring when the ring-check valve is in the closed position;
**characterized in that** the ring assembly further includes:
an inner ring (80, 280, 680) being concentrically located around the shaft (52) of the retainer tip (48, 548, 648);
a plurality of inward-facing flutes (76) maintaining a spacing between the ring (72, 272) and the inner ring (80, 280, 680), the spacing between the ring and the inner ring providing a throughput region (88), and
the tip portion (60, 360, 560) being sized as to minimally occlude the throughput region by not extending past the inner ring (80, 280, 680).

2. The ring-check valve (36, 236, 336, 436, 536, 636, 736) of claim 1, wherein the ring assembly (50, 450) includes the inward-facing flutes (76) that extend towards the retainer tip (48, 548, 648).

3. The ring-check valve (36, 236, 336, 436, 536, 636, 736) of claim 2, wherein:
the inner ring (80, 280, 680) is located around the shaft (52) on the retainer tip (48, 548, 648), the inner ring interconnecting the inward-facing flutes (76), and providing a contact surface on the inner ring while the ring assembly (50, 450) is in the open position.

4. The ring-check valve (36, 236, 336, 436, 536, 636, 736) of claim 2, wherein:
the ring (72, 272) is sized to be in contact with an inner surface of the extrusion barrel (22), the inward-facing flutes (76) extending from the ring towards the shaft (52) on the retainer tip (48, 548, 648).

5. The ring-check valve (36, 336, 436) of claim 4, wherein the inward-facing flutes (76) are shorter than the ring (72, 272).

6. The ring-check valve (36, 236, 336, 436, 536, 636, 736) of claim 4, wherein a thickness of the ring (72, 272) diminishes from its rearward edge to its forward edge.

7. The ring-check valve (36, 236, 336, 436, 536, 636, 736) of claim 1, wherein:
the shaft (52) is operable to be coaxially mounted to the distal end of the injection screw (24),
the tip portion (60, 360, 560) is at a forward end of the retainer tip (48, 548, 648), the tip portion having a greater diameter than the shaft, the ring assembly (50, 450) operable to stop movement of the ring assembly in a forward direction, and further provide a contact surface on the retainer tip (48, 548, 648); and
the rear seat (68) extends radially from the shaft, operable to stop movement of the ring assembly (50, 450) in a rearward direction, the rear seat being further operable to block the melt from flowing through the ring-check valve when engaged with the ring assembly.

8. The ring-check valve (36, 236, 336, 436, 536, 636, 736) of claim 1, wherein the retainer tip (48, 548, 648) includes at least one channel (92) formed therethrough for facilitating expression of the melt located between opposing surfaces of the ring assembly (50, 450) and the retainer tip (48, 548, 648).

9. The ring-check valve (36, 236, 336, 436, 536, 636, 736) of claim 2, wherein one of the ring assembly (50, 450) and the retainer tip (48, 548, 648) includes at least one insert located between contact surfaces on the ring assembly and the retainer tip to mitigate wear on the one of the ring assembly and the retainer tip.

10. The ring-check valve (36, 236, 336, 436, 536, 636, 736) of claim 9, wherein the at least one insert includes a wear rings(98) coaxially mounted around the retainer tip (48, 548, 648) between the tip portion (60, 360, 560) of the retainer tip and the inward-facing flutes (76) on the ring assembly (50, 450).

11. The ring-check valve (36, 236, 336, 436, 536, 636, 736) of claim 9, wherein the at least one insert are carbide inserts mounted to a contact surface of one of the ring assembly and the retainer tip (48, 548, 648).

12. The ring-check valve (36, 236, 336, 436, 536, 636, 736) of claim 2, wherein:
the inner ring (80, 280, 680) located around the shaft (52) on the retainer tip (48, 548, 648), the inner ring interconnecting the inward-facing flutes (76), the inner ring further having an undercut (700a) for facilitating expression of the melt located between opposing surfaces of the ring assembly (50, 450) and the retainer tip.

13. The ring-check valve (636, 736) of claim 1, wherein an opposing surface on one of the ring assembly (50, 450) and the retainer tip (48, 548, 648) is threaded (694) to facilitate expression of the melt located therebetween.

14. A molding system, comprising the ring-check valve (36, 236, 336, 436, 536, 636, 736) of any one of claims 1-13.

15. An injection unit, comprising the ring-check valve (36, 236, 336, 436, 536, 636, 736) of any one of claims 1-13.

## Patentansprüche

1. Ein Ring-Rückschlagventil (36, 236, 336, 436, 536, 636, 736) für eine Einspritz-Förderschnecke (24), beinhaltend:
einen Aufnahmedorn (48, 548, 648) betriebsfertig für die Montage an einem langen Ende der Einspritz-Förderschnecke (24);
ein Montagedichtring (50, 450), koaxial montiert um den Aufnahmedorn herum, Montagedichtring und Aufnahmedorn betriebsfertig für die zusammenwirkende Verfahrbewegung zwischen (i) einer offenen Stellung, die den Durchfluss von Schmelze durch das Ring-Rückschlagventil ermöglicht, und (ii) einer geschlossenen Stellung, die einen Rückfluss der Schmelze verhindert; und der Aufnahmedorn (48, 548, 648) drehbar und verschiebbar, der Aufnahmedorn beinhaltend:
eine Welle (52)
einen Dornabschnitt (60, 360, 560) am vorderen Ende der Welle; und
eine rückwärtige Aufnahme (68), die sich nach außen von der Welle erstreckt mit einem Aufnahmeabschnitt (82); und
dem Montagedichtring (50, 450) mit:
einem Ring (72, 272), der so dimensioniert ist, dass er an der Innenseite eines Extrusionszylinders (22) anstößt, der Aufnahmeabschnitt für die Aufnahme des Rings, wenn sich das Ring-Rückschlagventil in der geschlossenen Stellung befindet;
**dadurch gekennzeichnet, dass** der Montagedichtring weiterhin beinhaltet:
einen inneren Ring (80, 280, 680), konzentrisch angeordnet auf der Welle (52) des Aufnahmedoms (48, 548, 648);
eine Vielzahl nach innen weisenden Auskehlungen (76) als Abstandhalter zwischen dem Ring (72, 272) und dem Innenring (80, 280, 680), wobei der Abstand zwischen dem Ring und dem Innenring einen Durchsatzbereich (88) darstellt, und
der Dornabschnitt (60, 360, 560) so dimensioniert ist, dass er den Durchsatzbereich minimal verdeckt, indem er nicht über den Innenring (80, 280, 680) herausragt.

2. Das Ring-Rückschlagventil (36, 236, 336, 436, 536, 636, 736) des Anspruchs 1, wobei der Montage-dichtring (50, 450) nach innen weisende Auskehlungen (76) aufweist, die sich bis zum Aufnahmedorn (48, 548, 648) erstrecken.

3. Das Ring-Rückschlagventil (36, 236, 336, 436, 536, 636, 736) des Anspruchs 2, wobei:
der innere Ring (80, 280, 680) um die Welle (52) herum auf dem Aufnahmedorn (48, 548, 648) angeordnet ist, der innere Ring fasst in die nach innen gerichteten Auskehlungen (76) und eine Kontaktfläche auf dem Innenring bietet, wenn der Montagedichtring (50, 450) sich in der 'offen' Stellung befindet.

4. Das Ring-Rückschlagventil (36, 236, 336, 436, 536, 636, 736) des Anspruchs 2, wobei:
der Ring (72, 272) so dimensioniert ist, dass er an der Innenseite im Extrusionszylinder (22) anstößt, die nach innen weisenden Auskehlungen (76) sich von dem Ring hin zur Welle (52) des Aufnahmedoms (48, 548, 648) erstrecken.

5. Das Ring-Rückschlagventil (36, 336, 436) des Anspruchs 4, wobei die nach innen weisenden Auskehlungen (76) kürzer als der Ring (72, 272) sind.

6. Das Ring-Rückschlagventil (36, 236, 336, 436, 536, 636, 736) des Anspruchs 4, wobei sich eine Dicke des Rings (72, 272) von seiner hinteren Kante bis zur vorderen Kante verringert.

7. Das Ring-Rückschlagventil (36, 236, 336, 436, 536, 636, 736) des Anspruchs 1, wobei:
die Welle (52) betriebsfertig ist, um koaxial auf dem langen Ende der Einspritz-Förderschnecke (24) montiert zu werden,
der Dornabschnitt (60, 360, 560) am vorderen Ende des Aufnahmedoms (48, 548, 648) angebracht ist, der Dornabschnitt einen größeren Durchmesser hat als die Welle, der Montagedichtring (50, 450) betriebsfähig ist, die Bewegung des Montagedichtrings in einer vorderen Stellung zu stoppen, und darüber hinaus eine Kontaktoberfläche auf dem Aufnahmedorn (48, 548, 648) zu bieten; und
die rückwärtige Aufnahme (68) sich radial von der Welle ausdehnt, betriebsfähig, um die Bewegung des Montagedichtrings (50, 450) in einer rückwärtigen Stellung zu stoppen, wobei die rückwärtige Aufnahme darüber hinaus betriebsfähig ist, die Schmelze daran zu hindern durch das Ring-Rückschlagventil zu fließen, wenn sie mit dem Montagedichtring verriegelt ist.

8. Das Ring-Rückschlagventil (36, 236, 336, 436, 536, 636, 736) des Anspruchs 1, wobei der Aufnahmedorn (48, 548, 648) mindestens einen Kanal (92) durch diesen geführt beinhaltet, um die Expression der Schmelze zu ermöglichen, die sich zwischen den gegenüberliegenden Oberflächen des Montagedichtrings (50, 450) und des Aufnahmedoms (48, 548, 648) befindet.

9. Das Ring-Rückschlagventil (36, 236, 336, 436, 536, 636, 736) des Anspruchs 2, wobei einer der Montagedichtring (50, 450) oder Aufnahmedorn (48, 548, 648) mindesten ein Einsatzteil beinhaltet, das sich zwischen den Kontaktoberflächen des Montagedichtrings und des Aufnahmedorns befindet, um den Verschleiß auf der Oberflächen des Montagedichtring oder des Aufnahmedorns zu verringern.

10. Das Ring-Rückschlagventil (36, 236, 336, 436, 536, 636, 736) des Anspruchs 9, wobei mindestens ein Einsatzteil eine Abriebscheibe (98) beinhaltet, die koaxial um den Aufnahmedorn (48, 548, 648) angebracht ist zwischen Dornabschnitt (60, 360, 560) des Aufnahmedoms und den nach innen weisenden Auskehlungen (76) auf dem Montagedichtring (50, 450).

11. Das Ring-Rückschlagventil (36, 236, 336, 436, 536, 636, 736) des Anspruchs 9, wobei mindestens ein Einsatzstück Hartmetall-Einsatzstücke sind, die auf einer Kontaktfläche des Montagedichtrings und des Aufnahmedoms (48, 548, 648) montiert sind.

12. Ein Ring-Rückschlagventil (36, 236, 336, 436, 536, 636, 736) des Anspruchs 2, wobei:
der innere Ring (80, 280, 680) um die Welle (52) herum auf dem Aufnahme-dom (48, 548, 648) angeordnet ist, der innere Ring in die nach innen gerichteten Auskehlungen (76) fasst, der Innenring darüber hinaus eine eingeschnittene Vertiefung (700a) hat, um die Expression der Schmelze zu erleichtern, die sich zwischen den gegenüberliegenden Oberflächen des Montagedichtrings (50, 450) und des Aufnahmedoms befindet.

13. Das Ring-Rückschlagventil (636, 736) des Anspruchs 1, wobei eine der gegenüberliegenden Oberflächen des Montagedichtrings (50, 450) und des Aufnahmedoms (48, 548, 648) mit einem Gewinde (694) versehen ist, um die Expression der Schmelze zu erleichtern, die sich zwischen den gegenüberliegenden Oberflächen befindet.

14. Ein Formgebungssystem, welches das Ring-Rückschlagventil (36, 236, 336, 436, 536, 636, 736) beinhaltet, eines der Patentansprüche 1 -13.

15. Eine Einspritzeinheit, welche das Ring-Rückschlagventil (36, 236, 336, 436, 536, 636, 736) beinhaltet, eines der Patentansprüche 1 -13.

## Revendications

1. Clapet anti-retour d'anneau (36, 236, 336, 436, 536, 636, 736) pour une vis d'injection (24), comprenant :
un embout de retenue (48, 548, 648), pouvant fonctionner de façon à être fixé à une extrémité distale de la vis d'injection (24) ;
un bloc d'anneau (50, 450), monté de manière coaxiale autour de l'embout de retenue, le bloc d'anneau et l'embout de retenue pouvant être actionnés pour se déplacer de manière coordonnée entre (i) une position ouverte qui permet à la masse fondue de s'écouler à travers le clapet anti-retour d'anneau et (ii) une position fermée qui empêche le retour de la masse fondue ;
l'embout de retenue (48, 548, 648), rotatif et mobile, comprend :
un arbre (52) ;
une pointe (60, 360, 560) à une extrémité avant de l'arbre, et
un siège arrière (68) s'étendant vers l'extérieur depuis l'arbre, le siège arrière comprenant une assise (82), et
le bloc d'anneau (50, 450) comprenant :
un anneau (72, 272) dimensionné pour jouxter une face intérieure d'un cylindre d'extrusion (22), l'assise pour placer l'anneau lorsque le clapet anti-retour d'anneau se trouve en position fermée ;
**caractérisé en ce que** le bloc d'anneau comprend également :
un anneau interne (80, 280, 680) étant situé de façon concentrique autour de l'arbre (52) de l'embout de retenue (48, 548, 648) ;
une pluralité de cannelures tournées vers l'intérieur (76) maintenant une certaine distance entre l'anneau (72, 272) et l'anneau interne (80, 280, 680), l'écartement entre l'anneau et l'anneau interne formant un passage (88), et
la pointe (60, 360, 560) étant dimensionnée pour obturer au minimum le passage, sans s'étendre au-delà de l'anneau interne (80, 280, 680).

2. Clapet anti-retour d'anneau (36, 236, 336, 436, 536, 636, 736) selon la revendication 1, dans lequel le bloc d'anneau (50, 450) présente des cannelures tournées vers l'intérieur (76) qui s'étendent vers l'embout de retenue (48, 548, 648).

3. Clapet anti-retour d'anneau (36, 236, 336, 436, 536, 636, 736) selon la revendication 2, où :
l'anneau interne (80, 280, 680) est situé autour de l'arbre (52) sur l'embout de retenue (48, 548, 648), l'anneau interne reliant les cannelures tournées vers l'intérieur (76) et fournissant une surface de contact sur l'anneau interne tandis que le bloc d'anneau (50, 450) est en position ouverte.

4. Clapet anti-retour d'anneau (36, 236, 336, 436, 536, 636, 736) selon la revendication 2, où :
l'anneau (72, 272) est dimensionné de manière à être en contact avec une surface intérieure du cylindre d'extrusion (22), les cannelures tournées vers l'intérieur (76) s'étendant de l'anneau vers l'arbre (52), sur l'embout de retenue (48, 548, 648).

5. Clapet anti-retour d'anneau (36, 336, 436) selon la revendication 4, où les cannelures tournées vers l'intérieur (76) sont plus courtes que l'anneau (72, 272).

6. Clapet anti-retour d'anneau (36, 236, 336, 436, 536, 636, 736) selon la revendication 4, où l'épaisseur de l'anneau (72, 272) diminue de son extrémité arrière vers son extrémité avant.

7. Clapet anti-retour d'anneau (36, 236, 336, 436, 536, 636, 736) selon la revendication 1, où :
l'arbre (52) peut fonctionner de façon à être monté de manière coaxiale à l'extrémité distale de la vis d'injection (24),
la pointe (60, 360, 560) se trouve à une extrémité avant de l'embout de retenue (48, 548, 648), la pointe ayant un diamètre supérieur à celui de l'arbre, le bloc d'anneau (50, 450) pouvant fonctionner pour arrêter le mouvement du bloc d'anneau vers l'avant et fournir également une surface de contact sur l'embout de retenue (48, 548, 648), et
le siège arrière (68) s'étend radialement à partir de l'arbre et peut être actionné pour arrêter le mouvement du bloc d'anneau (50, 450) vers l'arrière, le siège arrière étant aussi utilisable pour empêcher la masse fondue de s'écouler à travers le clapet anti-retour d'anneau lorsqu'il rejoint le bloc d'anneau.

8. Clapet anti-retour d'anneau (36, 236, 336, 436, 536, 636, 736) selon la revendication 1, où l'embout de retenue (48, 548, 648) comprend au moins un canal (92) formé à travers lui pour faciliter l'expression de la masse fondue située entre les surfaces opposées du bloc d'anneau (50, 450) et de l'embout de retenue (48, 548, 648).

9. Clapet anti-retour d'anneau (36, 236, 336, 436, 536, 636, 736) selon la revendication 2, où un des blocs d'anneau (50, 450) et l'embout de retenue (48, 548, 648) comprend au moins un insert, situé entre les surfaces de contact sur le bloc d'anneau et l'embout de retenue pour limiter l'usure d'un des blocs d'anneau et de l'embout de retenue.

10. Clapet anti-retour d'anneau (36, 236, 336, 436, 536, 636, 736) selon la revendication 9, où au moins un insert comprend un anneau d'usure (98), monté de façon coaxiale autour de l'embout de retenue (48, 548, 648), entre la pointe (60, 360, 560) de l'embout de retenue et les cannelures tournées vers l'intérieur (76) sur le bloc d'anneau (50, 450).

11. Clapet anti-retour d'anneau (36, 236, 336, 436, 536, 636, 736) selon la revendication 9, où au moins un insert sont des inserts en carbure montés sur une surface de contact d'un des blocs d'anneau et l'embout de retenue (48, 548, 648).

12. Clapet anti-retour d'anneau (36, 236, 336, 436, 536, 636, 736) selon la revendication 2, où :
l'anneau interne (80, 280, 680), situé autour de l'arbre (52) sur l'embout de retenue (48, 548, 648), l'anneau interne reliant les cannelures tournées vers l'intérieur (76), l'anneau interne présentant également un creux (700a) pour faciliter l'expression de la masse fondue située entre les surfaces opposées du bloc d'anneau (50, 450) et de l'embout de retenue.

13. Clapet anti-retour d'anneau (636, 736) selon la revendication 1, où une surface opposée sur un des blocs d'anneau (50, 450) et l'embout de retenue (48, 548, 648) est filetée (694) pour faciliter l'expression de la masse fondue située entre ceux-ci.

14. Système de moulage, comportant le clapet anti-retour d'anneau (36, 236, 336, 436, 536, 636, 736) selon l'une quelconque des revendications de 1 à 13.

15. Buse d'injection, comprenant le clapet anti-retour d'anneau (36, 236, 336, 436, 536, 636, 736) selon l'une quelconque des revendications de 1 à 13.
